# EUROPEAN PATENT APPLICATION

(11) **EP 3 982 255 A1**
(43) Date of publication of application: **13.04.2022**
(21) Application number: 20823324.7
(22) Date of filing: 10.06.2020
(51) Int. Cl.: G06F 9/38

(54) **DUAL-BUFFER ARCHITECTURE-BASED TEXTURE MAPPING HARDWARE ACCELERATOR**

(30) Priority: 10.06.2019 CN 201910495890
(71) Applicant: Huaxia General Processor Technologies Inc., Beijing 100080 (CN)
(72) Inventor: WU, Xingtao, Beijing 100080 (CN); WANG, Lei, Beijing 100080 (CN)
(74) Representative: Winter, Brandl - Partnerschaft mbB
(86) International application number: PCT/CN2020/095464
(87) International publication number: WO 2020/249026

(57) **Abstract**

The disclosure belongs to the technical field of Graphic Processing Unit (GPU) chip design, and particularly relates to a texture mapping hardware accelerator based on a double Buffer architecture. The texture mapping hardware accelerator includes an address calculation unit configured for calculating according to different texture address requests to obtain an address for accessing texel cache, a texel cache unit configured to obtain texels of corresponding cache lines from memory according to different request addresses, and a data calculation unit configured to carry out filtering processing according to different isotropic and anisotropic filtering modes and pixel processing for border_color and swizzle operation. With double Buffers, the calculation efficiency of texture index addresses may be improved, and when two layers of data need to be calculated at the same time, calculation may be started in parallel at the same time. When one enabled layer of data needs to be calculated, texels are indexed in parallel in an odd-even mode to guarantee data parallel calculation, so that the indexing time of the texel data is shortened, and the texel calculation efficiency is improved.

## Description

### Cross-Reference to Related Application

This application claims priority to Chinese Application No. 201910495890.0, filed on June 10, 2019, and entitled "Texture mapping hardware accelerator based on double Buffer architecture", the disclosure of which is hereby incorporated by reference in its entirety.

### Technical Field

The disclosure relates to the technical field of Graphic Processing Unit (GPU) chip design, in particular to a texture mapping hardware accelerator based on a double Buffer architecture.

### Background

Texture mapping operation is widely applied to GPU, may be used as a computing unit in the general computing field of General Purpose GPU (GPGPU), and may also be used as an executor of a graphic rendering pipeline on texture data fetch and sample. The performance of a texture mapping unit directly affects the internal execution efficiency of a graphics processor, and directly affects the speed of data lookup and transfer in the general computing field, so that the design of the efficient texture mapping unit is particularly critical in GPU design.

### Summary

The disclosure aims at providing a texture mapping hardware accelerator based on a double Buffer architecture, so as to solve the problem that the speed of data Lookup and transfer is directly affected in the general computing field due to the fact that the internal execution efficiency of a graphic processor is poor in the background technology.

In order to achieve the purpose, the disclosure provides the following technical scheme: the texture mapping hardware accelerator based on the dual Buffer architecture includes an Image U0 unit, an LOD U1 unit, a CoordinateU2 unit, a Coordinate controller U3 unit and an address controller U4 unit.

The Image U0 unit is configured to store basic information of image and store mode, width, height, depth, border, inte_format, format, type and base of the corresponding image by taking target and different map layers as addresses when mipmap texture is enabled; and store mode, width, height, depth, border, inte_format, format, type and base values of the corresponding layer by taking target and different layers as addresses when layers are enabled, subdivide one address of a mipmap layer into six sub-addresses representing different face information of 0, 1, 2, 3, 4 and 5 when cubemap is enabled. When the layers are enabled without information of the map layers, the mode, width, height, depth, border, inte_format, format and type of different layers are the same and the base is different; when the layers are enabled and the map layers are enabled, mode, width, height, depth, border, inte_format, format and type are the same and base is different; and register configuration under 1D, 2D, 3D, rectangle, cubemap, 1D_ARRAY, 2D_ARRAY, cubemap_array, 2D_multisample, 2D_multisample, and 2D_multisample_array modes is supported.

The LOD U1 unit is configured to complete level value calculation under different filtering modes and obtain an address for accessing the image unit in combination with accessing a target address; before the level value calculation, first, the basic information of the image needs to be obtained as a reference for the subsequent level calculation by taking the target and base_level value as level0 for reading the image unit, then the calculation of the level value takes into account two situations: when lod is enabled, if the image is in layer mode, at the time, the width and height information of the different layers are equal, regardless of the filtering mode being mag_filter or min_filter, the level value closest to the base_level direction is taken as level0 for reading offset of the information of image, while the filter_type size matches the requested filter size; when lod is enabled, if image is in mipmap mode, at the time, the width, height and depth of different layers are not equal, consider mag_filter to take value closest to base_level for reading offset of the information of image in near mode and linear mode, consider near, linear, near_mipmap_near, linear_mipmap_near to take the value least close to base_level for reading offset of image in min_filter mode, while filter-type matches the requested filtering mode, consider min_filter to take the two adjacent layers for reading the offset of the information of image in near_mipmap_linear and linear_mipmap_linear modes, ratio_I is the fractional part of the lod value minus the level value,at the moment, the integer part of lod is level0, level0 plus 1 is level1, if the lod value is min_lod, at the moment, level0 is the same as level1, and thus fiter_type is filtering of near_mipmap_near and linear_mipmap_near, respectively; similarly, when the partial derivative is enabled as the lod, according to the primitive types primitive, dux, duy, dvx, dvy, dwx, dwy, delt_x and delt_y passed from raster, two conditions including polygon/point and line are available, the lod of polygon/point and line is obtained through calculation respectively, if the image is in the layer mode, at the moment, the width and height information of the different layers are equal, no matter the filtering mode is mag_filter or min_filter, one level value closest to the base_level direction is taken as level0 for reading the offset of the information of image, and the filter-type size matches the requested filtering size; if the image is in mipmap mode, at the time, the width, height and depth of the different layers are not equal, consider mag_filter to take the value closest to base_level for reading the offset of the information of image in near mode and linear mode, consider near, linear, near_mipmap_near and linear_mipmap_near to take the value least close to base_level for reading the offset of the information of image in min_filter mode, while filter_type matches the requested filtering mode, consider min_filter to take the two adjacent layers for reading the offset of the information of image in near_mipmap_linear, linear_mipmap_linear modes, and ratio_I is the fractional part of the lod value minus the level value, at the moment, the integer part lod is level0, level0 plus 1 is level1, if the lod value is min_lod, then level0 is the same as level1, so fiter_type is taken for filtering of near_mipmap_near and linear_mipmap_near. If level0 and level1 are enabled, the trilinear filtering mode is realized, the following trilinear filtering modes are available: trilinear isotropic (near_mipmap_linear, line_mipmap_linear), trilinear anisotropic; if only level0 is valid, only the following filtering modes are available: point isotropic (near, near_mipmap_near), bilinear isotropic (linear, linear_mipmap_near), bilinear anisotropic.

The CoordinateU2 unit is configured to complete coordinate conversion and address conversion of s, t, r and q in the fetch and sampler modes; when cubemap_array is enabled, the Q coordinate at the moment is not 0 and represents the layer row number, s, t and r represent the sizes in the x, y and z directions respectively, and the s and t coordinates in the plane coordinates are obtained through the mapping relation; when the rectangle mode is enabled, the s and t coordinates at the moment do not need to be subjected to unnormalization processing; if the coordinates s, t and r exceed respective expression ranges, the coordinates are constrained by adopting different wrap modes; when level0 and the level1 are enabled, the respective width, height and depth values of level0 and the level1 are obtained from the image unit, the respective width, height and depth values are multiplied with s, t and r to obtain the unnormalized texture coordinates u0, v0, w0 and u1, v1,w1, and when only the level0 is valid, the width, height and depth values of the level0 are obtained from the image unit, the width, height and depth values are multiplied with normalization s, t and r to obtain the unnormalized texture coordinates u0, v0 and w0; at the moment, ratio_u0, ratio_v0, ratio_w0 are fractional parts of u0, v0, w0, respectively, ratio_ul, ratio_vl, ratio-wl are fractional parts of ul, vl, wl, respectively, inte_u0, inte_v0, inte_w0 are integer parts of u0, v0, w0, respectively, inte_ul, inte_vl, inte_wl are integer parts of ul, vl, wl, respectively; when wrap operation is performed, if the borde value in the image content has a value, and the address has overflowed at the moment, disable requests a texel at the moment, and the border_color value is enabled as input of the final pixel stage.

The coordinate controller U3 unit is configured to when level O and level1 are enabled, filter_type is point mode, and mode is ID, data written into coordinate bufferu0 is inte_u0, and data written into coordinate bufferul is inte_ul; when mode is 2D, data written into coordinate bufferu0 is inte_u0, and data written into coordinate bufferv0 is inte_v0; data written into coordinate bufferul is inte_ul, and the integer part written into coordinate buffervl is inte_vl; when the mode is 3D, data written into coordinate bufferu0 is inte_u0, data written into coordinate bufferv0 is inte_v0, data written into coordinate bufferw0 is inte_w0, data written into coordinate bufferul is inte_ul, data written into coordinate buffervl is inte_vl, and data written into coordinatewl is inte_wl; when filter_type is linear mode and mode is 1D, data written into coordinate bufferul is inte_ul, and data written into coordinate bufferul is inte_u1+1; data written into coordinate bufferu0 is inte_u0, and data written into coordinate bufferu0 is inte_u0+1; when the mode is 2D, data written to coordinate bufferu0 and coordinate bufferv0 are (inte_u0, inte_v0), (inte_u0+1, inte_v0), (inte_u0, inte_v0+1), (inte_u0+1, inte_v0+1) in sequence; data written into coordinate bufferul and coordinate buffervl are (inte_ul, inte_vl), (inte_ul+1, inte_vl), (inte_ul, inte_vl+1), (inte_ul+1, inte_vl+1) in sequence; when mode is 3D, data written into coordinate bufferu0, coordinate bufferv0 and coordinate bufferw0 are (inte_u0, inte_v0, inte_w0), (inte_u0+1, inte_v0, inte_w0), (inte_u0, inte_v0+1, inte_w0), (inte_u0+1, inte_v0+1, inte_w0),(inte_u0, inte_v0, inte_w0+1), (in_u0+1, inte_v0, inte_w0+1), (inte_u0,inte_v0+1,inte_w0+1), and (inte_u0+1, inte_v0+1, inte_u0+1) in sequence; data written into coordinate bufferul, coordinate buffervl, coordinate bufferwl are (inte_u1, inte_v1, inte_wl), (inte_u1+1, inte_v1, inte_wl), (inte_u1, inte_v1+1, inte_wl), (inte_u1+1, inte_v1+1, inte_wl), (inte_u1, inte_v1, inte_w1+1), (inte_u1+1, inte_v1, inte_w1+1), (inte_u1, inte_v1+1, inte_w1+1), and (inte_u1+1, inte_v1+1, inte_w1 +1); when level0 is enabled, filter_type is point mode, and mode is 1D, data written into coordinate bufferu0 is inte_u0; when mode is 2D, data written into the coordinate bufferu0 is inte_u0, and data written into the coordinate bufferv0 is inte_v0; when mode is 3D, data written into the coordinate bufferu0 is inte_u0, data written into the coordinate bufferv0 is inte_v0, and data written into the coordinate bufferw0 is inte_w0; when filter_type is linear mode and mode is 1D, data written into coordinate bufferu0 is inte_u0, and data written into coordinate bufferu0 is inte_u0+1; when mode is 2D, data written to coordinate bufferu0 and coordinate bufferv0 are (inte_u0, inte_v0), (inte_u0+1, inte_v0), (inte_u0, inte_v0+1), and (inte_u0+1, inte_v0+1) in sequence; when mode is 3D, data written into coordinate bufferu0, coordinate bufferv0 and coordinate bufferw0 are (inte_u0, inte_v0, inte_w0), (inte_u0+1, inte_v0, inte_w0), (inte_u0, inte_v0+1, inte_w0), (inte_u0+1, inte_v0+1, inte_w0), (inte_u0, inte_v0, inte_w0+1), (inte_u0+1, inte_v0, inte_w0+1), (in_u0, inte_v0+1, inte_w0+1), and (in_u0+1, inte_v0+1, inte_w0+1) in sequence.

The address controller U4 unit is configured to firstly complete calculation from texture coordinates to texture offset addresses; when level0 is valid, mode is 1D, the offset when the address calculation has no overflow is size*u0; mode is 2D, and the offset when address calculation has no overflow is size*(width0*u0+v0); mode is 3D, the offset when address calculation has no overflow is size*(width0*u0+v0)+w0*width0*height0; the address for final access to texel cache is base0+offset; Then the number of addresses under different inte_format conditions is obtained according to the alignment mode of the end of the offset and a 4-byte, and the end data are stored in the offset0 buffer; due to the fact that level1 is invalid, when texel cache is requested, according to a double-buffer operation mode, the odd number of addresses request the address of the texel cache to access the cache 0, the even number of addresses request the address of texel cache to access the cache1, and thus parallel access of the addresses is achieved; when level0 and level1 are both effective, mode is 1D, the offset when address calculation has no overflow is size*u0,size*u1; mode is 2D, and the offset when address calculation has no overflow is size*(width0*u0+v0),size*(width1*u1+v1); mode is 3D, the offset when address computation has no overflow is size*(width0*u0+v0)+w0*width0*height0,size*(width1*u1+v1)+w1*width1*height1; the address for final access to texel cache is base0+level0 offset and base1+level1 offset. At the moment, cache0 and cachel are requested in parallel.

Optionally, the LOD U1 unit includes two directly connected caches, and indexes of cache lines where different texels are located and store and replace operations of the cache lines are completed; and when level0 and level1 are valid at the same time, read operation requests for cache0 and cache1 are completed in parallel, and when only level0 is valid, odd cache line is stored in cache0, and even cache line is stored in cache1.

Optionally, the CoordinateU2 unit includes a data controllerUO unit, a filterU1 unit and a pixel unit U2.

The data controllerUO unit is configured to complete a splicing task of data from a cache line in combination with off0 and off1 according to different inte_formats when level0 and level1 are valid at the same time to obtain texture data corresponding to the texture address, write the respective data into data buffer0 and data buffer1 at the same time, and store the data of the respective level at the data buffer0 and the data buffer1 respectively; when only level0 is valid, in the same way, data of respective cache lines are read out from cache0 and cache1 respectively, odd data and even data are obtained according to different inte_format and off0, the odd data and the even data are written into data buffer0 and data buffer1 in a double mode, and at the moment, texel data of the same level are stored in data buffer0 and data buffer1.

The filterU1 unit is configured to firstly complete interception operation, intercept r, g, b and a values with different bit widths for different inte_formats, and then perform filtering calculation in an independent mode, and the interception method of the bit widths is performed according to different inte_formats; when both level0 and level1 are effective, the following filtering modes of filter_type are available: NAF (non-anisotropic) (near_mipmap_linear isotropic, linear mipmap_linear isotropic), BAF (bilinear-anisotropic) (invalid), TAF (trilinear-anisotropic), and the following filtering modes of filter_type are available when level O is valid and level1 is invalid: NAF (non-anisotropic) (near, near_mipmap_near, linear_mipmap_near), BAF (bilinear anisotropic), and TAF (trilinear-anisotropic) (invalid); when level0 and level1 are both valid and filter_type is TAF (near_mipmap_linear), whether mode is 1D, 2D and 3D, data0 and data1 are read from data buffer0 and data buffer1 at the same time, and the filtering result is data0*(1.0-ratio_I)+data1*ratio_I; if the filtering mode is TAF (line_mipmap_linear) and mode is 1D, first two data are read from data buffer0 and data buffer1 at the same time, respectively, data0, datal and data2, data3, the intermediate result of filtering is data0*(1.0-ratio_u0)+data2*ratio_u0, data1*(1.0-ratio_ul) +data3*ratio_ul, and the final result of the filtering is (data0*(1.0-ratio_u0)+(data2*ratio_u0)*(1.0-ratio_l)+ (data1*1.0-ratio_ul)+(data3*ratio_ul)*ratio_l; When mode is 2D, data0, data1, data2, data3, data4, data5, data6 and data7 are sequentially read from data buffer0 and data buffer1 at the same time, and the intermediate result of filtering is obtained through the first four data and the first four data are data0, data2, data4 and data6: data0*(1.0-ratio_u0)+data2*ratio_u0, data4*(1.0-ratio_u1)+data6*ratio_u1; the intermediate result of filtering is then obtained through the last four data: datal, data3, data5, data7: data1*(1.0-ratio_u0)+data3*ratio_u0, data5*(1.0-ratio_ul)+ data7*ratio_ul, and finally the final results of level0 and levell are obtained: (data0*(1.0-ratio_u0)+ data1*ratio_u0)*(1.0-ratio_v0)+(data2*(1.0-ratio_u0)+data3*ratio_u0*ratio_v0,(data4*(1.0-ratio_ul+ data5*ratio_ul)*(1,0-ratio_v1)+(data6*(1,0-ratio_u1)+data7*ratio_u1)*ratio_v1, the final filtering result is ((data0*(1.0-ratio_u0)+ data1*ratio_u0)*(1.0-ratio_v0)+(data2*(1.0-ratio_u0)+data3*ratio_u0)*ratio_v0)*(1.0-ratio_l)+ ((data4*(1.0-ratio_ul)+data5*ratio_ul)*(1.0-ratio_vl)+ (data6*(1.0-ratio_ul)+data7*ratio_ul)*ratio_vl)*ratio I; when mode is 3D, eight data are read from data buffer0 and data buffer1 in sequence at the same time, namely data 0, data 1, data 2, data 3, data 4, data 5, data 6, data 7, data 8, data 9, data 10, data 11, data 12, data 13, data 14 and data 15; the intermediate result of filtering is first obtained from the first eight data and the first eight data are data0, data1, data2, data3, data8, data9, data10, data11: ((data0*(1.0-ratio_u0)+data2*ratio_u0)*(1.0-ratio_v0)+((data1*(1.0-ratio_u0)+data3*ratio_u0)*ratio_ v0,((data8*(1.0-ratio_u1)+data9*ratio_u1)*(1.0-ratio_v1)+((data10*(1.0-ratio_u1)+data11*ratio_u1)* ratio_v1, and the intermediate result of filtering is then obtained through the last eight data and the last eight data are data4, data5, data6, data7, data12, data13, data14, data15: ((data4*(1.0-ratio_u0)+data5*ratio_u0)*(1.0-ratio_v0)+((data6*(1.0-ratio_u0)+data7*ratio_u0)*ratio_ v0,((data12*(1.0-ratio_u1)+data13*ratio_u1)*(1.0-ratio_v1)+((data14*(1.0-ratio_u1)+data15*ratio_u 1)*ratio_v1; The final filtering result is: ((((data0*(1.0-ratio_u0)+data2*ratio_u0)*(1.0-ratio_v0)+((data1*(1.0-ratio_u0)+data3*ratio_u0)*rati o_v0)*(1.0-ratio_w0)+(((data4*(1.0-ratio_u0)+data5*ratio_u0)*(1.0-ratio_v0)+((data6*(1.0-ratio_u0) +data7*ratio_u0)*ratio_v0)*ratio_w0)*(1.0-ratio_I)+((((data8*(1.0-ratio_u1)+data9*ratio_u1)*(1.0-rati o_v1)+((data10*(1.0-ratio_u1)+data11*ratio_u1)*ratio_v1)*(1.0-ratio_w1)+(((data12*(1.0-ratio_u1)+ data13*ratio_u1)*(1.0-ratio_v1)+((data14*(1.0-ratio_u1)+data15*ratio_u1)*ratio_v1)*ratio_w1)*ratio _I,when anisotropic is enabled, data in the data buffer0 and data buffer1 are subjected to anisotropic calculation to obtain the intermediate results filtering of data 0 and data a1, and the final filtering result is data 0*(1.0-ratio_I)+data1*ratio_I; when only level0 is valid and filter_type is near or near_mipmap_near, whether mode is 1D, 2D or 3D, data0 and data 1 are read from data buffer0 and data buffer1 at the same time, and the data 0 and data 1 are directly output without filtering after being converted; if the filtering mode is BAF, when mode is 1D, firstly, one data is sequentially read from data buffer0 and data buffer1 at the same time, respectively, data 0 and data 1, and the final filtering result is data0*(1.0-ratio_u0)+data 2*ratio_u0; When mode is 2D, data0, data1, data2 and data3 are sequentially read from data buffer0 and data buffer1 at the same time, and the intermediate result of filtering is data0*(1.0-ratio_u0)+data2*ratio_u0 through the first two data and the first two data are data0 and data2; then the intermediate result of filtering is obtained through the last two data and the last two data are data1 and data3: data1*(1.0-ratio_u0)+data3*ratio_u0, and finally the final filtering result is obtained:(data0*(1.0-ratio_u0)+data2*ratio_u0)*(1.0-ratio_l)+(data1*(1.0-ratio_u0)+data3*ratio_u0) *ratio_I; when mode is 3D, data0, data1, data2, data3, data4, data5, data6, data7 are sequentially read from data buffer0 and data buffer1 at the same time. The intermediate result of filtering is first obtained from the first four data: data0, data1, data4, data5: (data0*(1.0-ratio_u0)+data1*ratio_u0)*(1.0-ratio_v0)+(data4*(1.0-ratio_u0)+data5*ratio_u0)*ratio_v 0, and then the intermediate result of filtering is obtained from the last four data: data2, data3, data6, data7:(data2*(1.0-ratio_u0)+data3*ratio_u0)*(1.0-ratio_v0)+(data6*(1.0-ratio_u0)+data7*ratio_u0)*r atio_v0; and the final filtering result is((data0*(1.0-ratio_u0)+data1*ratio_u0)*(1.0-ratio_v0)+(data4*(1.0-ratio_u0)+data5*ratio_u0)*ratio _v0)*(1.0-ratio_w0)+((data2*(1.0-ratio_u0)+data3*ratio_u0)*(1.0-ratio_v0)+(data6*(1.0-ratio_u0)+d ata7*ratio_u0)*ratio_v0)*ratio_w0. After the filtering operation is performed, the output results of filter are texel_r, texel_g, texel_b and texel_a according to different inte_format formats, if format is color, when only r in inte_format has a value, texel_r is the filtering result, texel_g and texel_b are both 0, and texel_a is 1; if format is depth and stencil, at the moment, the result is assigned to the texel_r, texel_g, texel_b, texel_a components as 0 without performing the addition of filtering.

The pixel unit U2 is configured to take the border_color data as the input data for the pixel stage when border_color is enabled, and when the swizzle operation is not enabled, pixel_r, pixel_g, pixel_b and pixel_a are equal to border_color_r, border_color_g, border_color_b, and border_color_a in border_color, if swizzle operation is enabled, the respective channel data are converted in the swizzle mode, and finally, 4 paths of color components pixel_r, pixel_g, pixel_b and pixel_a are output in parallel.

Optionally, FP32, FP16, FP11, FP10 and INT32 data types in Color, depth, stencil and depth_stencil modes are supported.

Optionally, conversion of different reshaping, floating point type types under RGB/BGR format and different reshaping, floating point type types under RGBA/BGRA format is also supported.

Optionally, depth, stencil, depth_stencil comparison to depth texture and stencil index computation are also supported.

Compared with the prior art, the beneficial effects of the utility model are as follows.

Double Buffers are adopted to improve the calculation efficiency of texture index addresses, and when two layers of data need to be calculated at the same time, calculation may be started in parallel at the same time; and when one layer of enabled data needs to be calculated, the texels are indexed in parallel in an odd-even mode to guarantee data parallel calculation, so that the indexing time of the texel data is shortened, and the texel calculation efficiency is improved.

The double Buffers are adopted to improve the texel data calculation efficiency, and when two layers of data need to be calculated at the same time, texels may be read out according to two respective pipelines to achieve parallel calculation; and when one layer of enabled data needs to be calculated, a double Buffer mode is adopted for parallel access, so that the parallel access efficiency may be improved, and the texel calculation time is shortened.

When the mipmap texture is enabled, if the calculation lod is the set max_level, one of buffer pipeline address and data calculation is enabled, and trilinar is a bilinear filtering mode, so that the calculation complexity is reduced, and the hardware calculation power consumption is reduced.

When the border value exists and (U, V) coordinates after the wrap operation overflow, the user adopts border_color to set data, address and data calculation is avoided, thus texture access time is saved, and texture mapping calculation power consumption is reduced.

### Brief Description of the Drawings

Fig. 1 is design diagram of a texture mapping hardware accelerator based on a dual Buffer architecture according to an embodiment of the disclosure.
Fig. 2 is a texture coordinate value map of 2D texture coordinates in bilienar mode according to an embodiment of the disclosure.
Fig. 3 is a mapping relationship diagram of 3D texture coordinates in bilinear mode according to an embodiment of the disclosure.
Fig. 4 is a diagram of a correspondence relationship between texture addresses and cache lines in dual operations according to an embodiment of the disclosure.
Fig. 5 is a diagram of a computational model in 1D bilinear mode according to an embodiment of the disclosure.
Fig. 6 is a diagram of a computational model in 2Dbilinear mode according to an embodiment of the disclosure.
Fig. 7 is a diagram of a computational model in 3Dbilinear mode according to an embodiment of the disclosure.
Fig. 8 is a diagram of a computational model in 1D bilinear mode according to an embodiment of the disclosure.
Fig. 9 is a diagram of a computational model in 2Dbilinear mode according to an embodiment of the disclosure.
Fig. 10 is a diagram of a computational model in 3Dbilinear mode according to an embodiment of the disclosure.

### Detailed Description of the Embodiments

The technical solutions in the embodiments of the disclosure will be clearly and completely described below in combination with the drawings in the embodiments of the disclosure, and it is apparent that the described embodiments are only a part rather all of embodiments of the disclosure. All other embodiments obtained by those of ordinary skill in the art based on the embodiments of the disclosure without creative efforts shall fall within the protection scope of the embodiments of the disclosure.

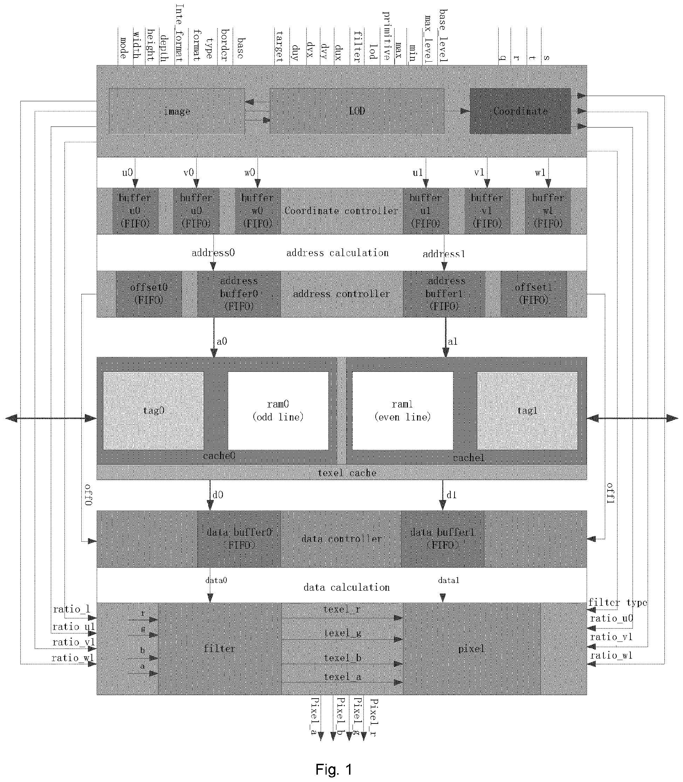

With reference to Figs. 1-10, the disclosure provides a texture mapping hardware accelerator based on a double Buffer architecture, which may well solve the problem of time process textures in texture address calculation and data calculation processes, and reduce filtering processing in different modes of color, depth and stencil in texture maps. As shown in Fig. 1, a texture mapping hardware accelerator based on a double Buffer architecture includes an address calculationU0 unit, an image unit U0 unit, an LOD U1 unit, a CoordinateU2 unit, a Coordinate controller U3 unit, an address controller U4 unit. The image unit U0 is configured to store basic information of image and store mode, width, height, depth, border, inte_format, format, type and base of the corresponding image by taking target and different map layers as addresses when mipmap texture is enabled; store mode, width, height, depth, border, inte_format, format, type and base values of the corresponding layer by taking target and different layers as addresses when layers are enabled, and subdivide one address of a mipmap layer into six sub-addresses representing different face information of 0, 1, 2, 3, 4 and 5 when a cubemap is enabled. When the layers are enabled without map layer information, the mode, width, height, depth, border, inte_format, format and type of different layers are the same and the base is different; when the layers are enabled and the map layers are enabled, the mode, width, height, depth, border, inte_format, format and type are the same and base is different; and register configuration in 1D, 2D, 3D, rectangle, cubemap, 1D_ARRAY, 2D_ARRAY, cubemap_array, 2D_multisample, 2D_multisample, and 2D_multisample_array modes is supported.

The LOD U1 unit is configured to complete level value calculation under different filtering modes and obtain an address for accessing an image unit in combination with an access target address; before level value calculation, first, the basic information of the image needs to be obtained as a reference for the subsequent level calculation by taking target and base_level value as level0 for reading the image unit. Then the calculation of the level value takes into account two situations: when lod is enabled, if image is in layer mode, at the time, the width and height information of the different layers are equal, regardless of the filtering mode being mag_filter or min_filter, the level value closest to the base_level direction is taken as level0 for reading the offset of the information of the image, while the filter_type size matches the requested filtering size; when lod is enabled, if image is mipmap mode, at the time, the width, height, depth of different layers are not equal, consider mag_filter to take the value closest to base_level for reading offset of the information of image in near mode and linear mode, consider near, linear, near_mipmap_near, linear_mipmap_near to take the value least close to base_level for reading image in min_filter mode, while filter-type matches the requested filter mode, consider min_filter to take the two adjacent layers for reading the offset of the information of image in near_mipmap_linear, linear_mipmap_linear mode, ratio_I is the fractional part of lod value minus level value,at the moment, the integer part of lod is level0, level0 plus 1 is level1, if the lod value is min_Iod, then level0 is the same as level1, so fiter_type is filtering of near_mipmap_near and linear_mipmap_near, respectively. Similarly, when the partial derivative is enabled as the lod, according to the primitive types primitive, dux, duy, dvx, dvy, dwx, dwy, delt_x, delt_y passed from raster, two conditions including polygon/point and line are available, the lod of the polygon/point and line is calculated respectively, if the image is in the layer mode, at this time, the width and height information of the different layers are equal, no matter the filtering mode is mag_filter or min_filter, one level value closest to the base_level direction is taken as level0 for reading the offset of information of image, and the filter_type size matches the requested filtering size; if image is mipmap mode, at the time, the width, height, depth of different layers are not equal, consider mag_filter to take the value closest to base_level for reading information of image in near mode and linear mode, consider near, linear, near_mipmap_near, linear_mipmap_near to take the value least close to base_level value for reading offset of image in min_filter mode, while filter-type matches the requested filtering mode, consider min_filter to take the two adjacent layers for reading the offset of the information of the image in near_mipmap_linear, linear_mipmap_linear mode, ratio I is the fractional part of lod value minus level value,at the moment, the integer part of lod is level0, level0 plus 1 is level1, if the lod value is min_lod, then level0 is the same as level1, so fiter_type is filtering of near_mipmap_near and linear_mipmap_near, respectively. If level O and level11 are enabled, the trilinear filtering mode is realized, and the following trilinear filtering modes are available: trilinear isotropic (near_mipmap_linear, line_mipmap_linear), and trilinear anisotropic; and if only level0 is valid, the following filtering modes are available: point isotropic (near, near_mipmap_near), bilinear isotropic (linear, linear_mipmap_near), and bilinear anisotropic.

The CoordinateU2 unit is configured to complete coordinate conversion and address conversion of s, t, r and q in the fetch and sampler modes. When cubemap_array is enabled, the Q coordinate at the moment is not 0 and represents the layer line number, s, t and r represent the sizes in the x, y and z directions respectively, and the s and t coordinates in the plane coordinates are obtained through the mapping relation; when the rectangle mode is enabled, the s and t coordinates at the moment do not need to be subjected to unnormalization processing; if the coordinates s, t and r exceed respective expression ranges, the coordinates are constrained by adopting different wrap modes; when level0 and the level1 are enabled, the respective width, height and depth values of level0 and level1 are obtained from the image unit, the respective width, height and depth values are multiplied with s, t and r to obtain the normalized texture coordinates u0, v0 and w0 and u1, v1 and w1, and when only level0 is valid, the width, height and depth values of the level0 are obtained from the image unit, and the respective width, height and depth values are multiplied with s, t and r to obtain the normalized texture coordinates u0, v0 and w0; and at the moment, ratio_u0, ratio_v0, ratio_w0 are fractional parts of u0, v0, w0, respectively, ratio_ul, ratio_vl, ratio-wl are fractional parts of ul, vl, wl, respectively, inte_u0, inte_v0, inte_w0 are integer parts of u0, v0, w0, respectively, and inte_ul, inte_vl, inte_wl are integer parts of ul, vl, wl, respectively. When performing a wrap operation, if the border in the image content is valid, and the address has overflow at the moment, disable requests a texel at the moment, and border_color value is enabled as input to the final pixel stage.

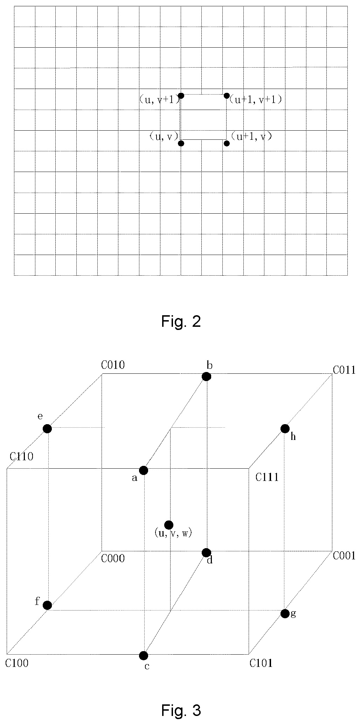

The coordinate controller U3 unit is configured to when level O and level1 are enabled, filter_type is point mode, and mode is 1D, data written into coordinate bufferu0 is inte_u0, and data written into coordinate bufferul is inte_ul; when mode is 2D, data written into coordinate bufferu0 is inte_u0, and data written into coordinate bufferv0 is inte_v0; data written into coordinate bufferu1 is inte_u1, and the integer part written into coordinate bufferv1 is inte_v1; when mode is 3D, data written into coordinate bufferu0 is inte_u0, data written into coordinate bufferv0 is inte_v0, data written into coordinate bufferw0 is inte_w0, data written into coordinate bufferu1 is inte_u1, data written into coordinate bufferv1 is inte_v1, and data written into coordinatew1 is inte_w1; when filter_type is linear mode and mode is 1D, data written into coordinate bufferu1 is inte_u1, and data written into coordinate bufferu1O is inte_u1+1; data written into coordinate bufferu0 is inte_u0, and data written into coordinate bufferu0 is inte_u0+1; when mode is 2D, 4 point coordinates around are taken, as shown in Fig. 2, data written into coordinate bufferu0 and coordinate bufferv0 are (inte_u0, inte_v0), (inte_u0+1, inte_v0), (inte_u0, inte_v0+1), (inte_u0+1, inte_v0+1) in sequence; data written into coordinate bufferul, coordinate buffervl are (inte_ul, inte_vl), (inte_ul+1, inte_vl), (inte_ul, inte_vl+1), (inte_ul+1, inte_vl+1) in sequence; when mode is 3D, 8 point coordinates around are taken as shown in Fig. 3, data written into coordinate bufferu0, coordinate bufferv0, coordinate bufferw0 are (inte_u0, inte_v0, inte_w0), (inte_u0+1, inte_v0, inte_w0), (inte_u0, inte_v0+1, inte_w0), (inte_u0+1, inte_v0+1, inte_w0), (inte_u0, inte_v0, inte_w0+1), (inte_u0+1, inte_v0, inte_w0+1), (in_u0, inte_v0+1, inte_w0+1), and (in_u0+1, inte_v0+1, inte_w0+1) in sequence; data written into coordinate bufferu1, coordinate bufferv1, and coordinate bufferw1 are (inte_u1 ,inte_v1 ,inte_w1),(inte_u1+1 ,inte_v1 ,inte_w1),(inte_u1 ,inte_v1+1 ,inte_w1),(inte_u1+1 ,inte _v1+1,inte_w1),(inte_u1,inte_v1,inte_w1+1),(inte_u1+1,inte_v1,inte_w1+1),(inte_u1,inte_v1+1,inte _w1+1),(inte_u1+1,inte_v1+1,inte_w1+1) in sequence; when level0 is enabled, filter_type is point mode, and mode is 1D, data written into coordinate bufferu0 is inte_u0; when mode is 2D, data written into coordinate bufferu0 is inte_u0, and data written into coordinate bufferv0 is inte_v0; when mode is 3D, data written into coordinate bufferu0 is inte_u0, data written into coordinate bufferv0 is inte_v0, and data written into coordinate bufferw0 is inte_w0; when filter_type is linear mode and mode is 1D, data written into coordinate bufferu0 is inte_u0, and data written into coordinate bufferu0 is inte_u0+1; when mode is 2D, data written into coordinate bufferu0 and coordinate bufferv0 are (inte_u0, inte_v0), (inte_u0+1, inte_v0), (inte_u0, inte_v0+1), and (inte_u0+1, inte_v0+1) in sequence; when mode is 3D, data written into coordinate bufferu0, coordinate bufferv0, and coordinate bufferw0 are (inte_u0, inte_v0, inte_w0), (inte_u0+1, inte_v0, inte_w0), (inte_u0, inte_v0+1, inte_w0), (inte_u0+1, inte_v0+1, inte_w0), (inte_u0, inte_v0, inte_w0+1), (inte_u0+1, inte_v0, inte_w0+1), (in_u0, inte_v0+1, inte_w0+1), and (in_u0+1, inte_v0+1, inte_w0+1) in sequence.

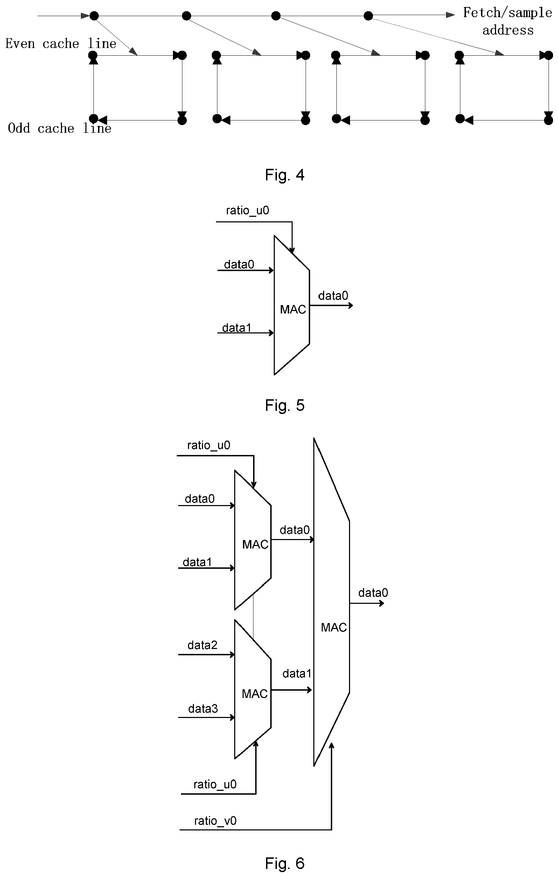

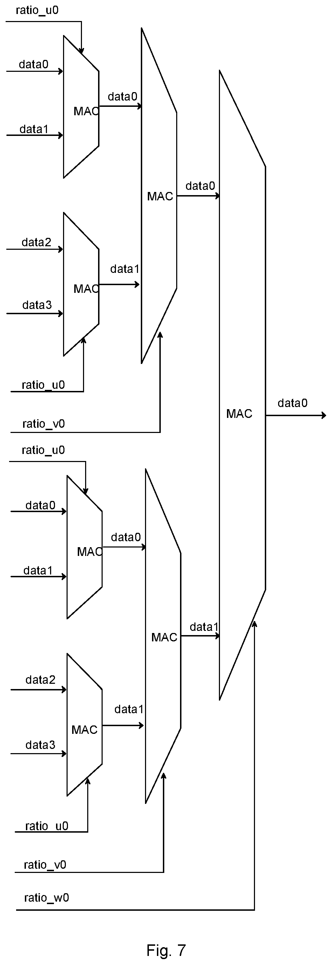

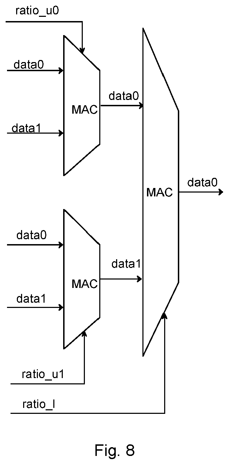

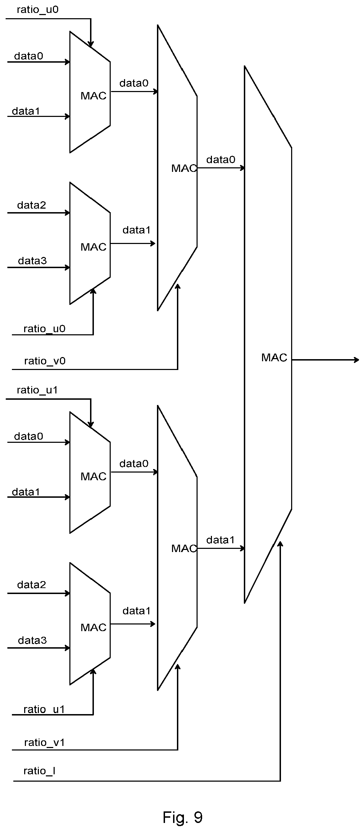

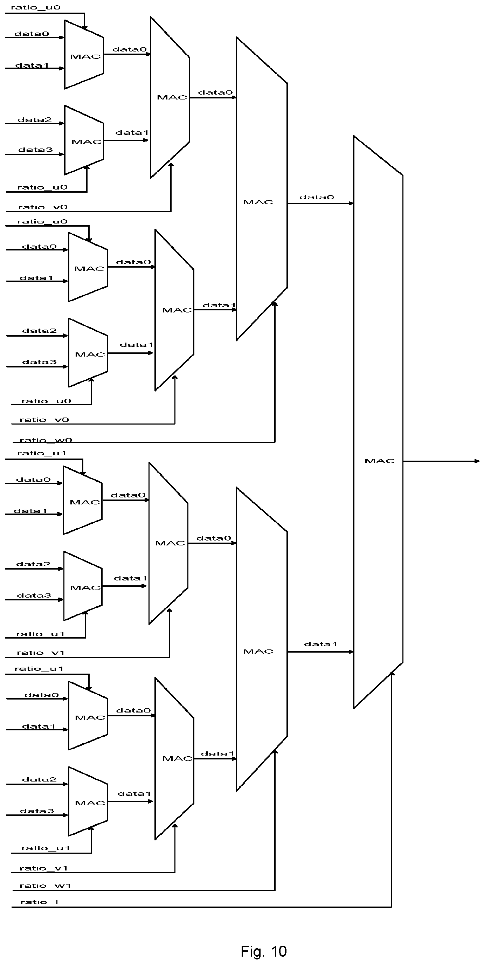

The address controller U4 unit is configured to firstly complete calculation from texture coordinates to texture offset addresses; when level0 is valid, mode is 1D, the offset when the address calculation has no overflow is size*u0; mode is 2D, and the offset when address calculation has no overflow is size*(width0*u0+v0); mode is 3D, the offset when address calculation has no overflow is size*(width0*u0+v0)+w0*width0*height0; the address for final access to texel cache is base0+offset; Then the number of addresses under different inte_format conditions is obtained according to the alignment mode of the end of the offset and a 4-byte, and the end data are stored in the offset0 buffer; due to the fact that level1 is invalid, when texel cache is requested, according to a double-buffer operation mode, the odd number of addresses request the address of the texel cache to access the cache 0, the even number of addresses request the address of texel cache to access the cache1, and thus parallel access of the addresses is achieved. when level0 and level1 are both effective, mode is 1D, the offset when address calculation has no overflow is size*u0,size*u1; mode is 2D, and the offset when address calculation has no overflow is size*(width0*u0+v0),size*(width1*u1+v1); mode is 3D, the offset when address computation has no overflow is size*(width0*u0+v0)+w0*width0*height0,size*(width1*u1+v1)+w1*width1*height1; The address for final access to texel cache is base0+level0 offset and base1+level1 offset. At the moment, cache0 and cachel are requested in parallel. The texel cache U1 unit includes two caches which are directly connected, and indexes of cache lines where different texels are located and store and replace operations of the cache lines are completed. When level0 and level1 are valid at the same time, read operation requests for cache0 and cache1 are completed in parallel, and when only level0 is valid, odd cache line is stored in cache0, and even cache line is stored in cache1. The data controllerU2 unit includes a data controllerU0, a filterU1 unit, a pixel unit U2. Similar to address controller unit, the data controllerUO is configured to complete a splicing task of data from a cache line in combination with off0 and off1 according to different inte_formats when level0 and level1 are valid at the same time to obtain texture data corresponding to the texture address, write the respective data into data buffer0 and data buffer1 at the same time, and store the data of the respective level at the data buffer0 and the data buffer1 respectively; when only level0 is valid, in the same way, data of respective cache lines are read out from cache0 and cache1 respectively, odd data and even data are obtained according to different inte_formats and off0, the odd data and the even data are written into data buffer0 and data buffer1 in a double mode, and at the moment, texel data of the same level are stored in data buffer0 and data buffer1, as shown in Fig. 4, read operation to cache is completed in clockwise direction. The filterU1 unit is configured to firstly complete interception operation, intercept r, g, b and a values with different bit widths for different inte_formats, and then respectively perform filtering calculation in an independent mode, and the interception method of the bit widths are executed according to different inte_formats. The filter unit supports inte_format under OGL standard as color: r8_norm, r8_snorm, r8I, r8UI, r3_g3_b2_norm (large, small end), rgba2_norm, rgba4 (large, small end), rgb5_a1_norm (large, small end), rgb4_norm, rgb5_norm, rgb565_norm (large, small end), r16_norm, r16_snorm, r16f, r16UI, r16I, rg8_norm, rg8_snorm, rg8UI, rg8I, srgb8 (non-linear), rgb8I, rgb8UI, rgb8_snorm, rgb8_norm, rgb10_norm, rgb10_a2_norm (large, small end), rgb10_a2UI (large, small end), srgb8_a8_norm (large, small end), rllf_gllf_b10f, rgb9_e5 (shared), rgba8_norm (large, small end), rgba8_snorm (large, small end), rgba8UI (large, small end), rgba8I (large, small end), rg16, rg16_snorm, rg16I, rg16UI, rg16f,r32I,r32UI and r32f. The filter unit supports inte_format as depth and stencils: depth16, depth24, depth32, depth32f, stencil_indexI, stencil_index4, stencil_index8, stencil_index16, depth24_stencil8, and depth32f_stencil8. For two integer data types (signed and unsigned) and four float data types (normalized, unnormalized, non-linear, shared data types), snorm, norm, srgb, and rgbae need to be subjected to filtering calculation under different filter_types before performing the filtering operation. When both level0 and level1 are effective, filter_type is filtered by NAF (non-anisotropic) (near_mipmap_linear isotropic, linear mipmap_linear isotropic), BAF (bilinear-anisotropic) (invalid), TAF (trilinear-anisotropic), and filter_type is filtered by NAF (non-anisotropic) (near, near mipmap_near, linear mipmap_near), BAF (bilinear anisotropic), TAF (trilinear-anisotropic) when level O is valid and level1 is invalid. when level0 and level1 are both valid and filter_type is TAF (near_mipmap_linear), whether mode is 1D, 2D and 3D, data0 and data1 are read from data buffer0 and data buffer1 at the same time, and the filtering result is data0*(1.0-ratio_I)+data1*ratio_I; if the filtering mode is TAF (line_mipmap_linear) and mode is 1D, first two data are read from data buffer0 and data buffer1 at the same time, respectively, data0, dataal and data2, data3, the intermediate result of filtering is data0*(1.0-ratio_u0)+data2*ratio_u0, data1*(1.0-ratio_ul)+data3*ratio_ul, and the final filtering result is (data0*(1.0-ratio_u0)+(data2*ratio_u0)*(1,0-ratio_I)+(data1*1.0-ratio_ul)+(data3*ratio_ul)* ratio_I, as shown in Fig. 8; if mode is 2D, data0, data1, data2, data3, data4, data5, data6 and data7 are sequentially read from data buffer0 and data buffer1 at the same time, and the intermediate result of filtering is obtained through the first four data and the first four data are data0, data2, data4 and data6: data0*(1.0-ratio_u0)+data2*ratio_u0, data4*(1.0-ratio_u1)+data6* ratio_u1; the intermediate result of filtering is then obtained through the last four data: datal, data3, data5, data7: data1* (1.0-ratio_u0)+data3*ratio_u0, data5*(1.0-ratio_ul)+data7*ratio_ul, and finally the final results of level0 and levell are obtained: (data0* (1.0-ratio_u0)+data1*ratio_u0)*(1.0-ratio_v0)+(data2* (1.0-ratio_u0)+data3*ratio_u0*ratio_v0, (data4* (1.0-ratio_ul)+data5*ratio_ul)*(1.0-ratio_vl)+(data6*(1.0-ratio_u1)+data7*ratio_u1)*ratio_v1, the final filtering result is ((data0*(1.0-ratio_u0)+data1*ratio_u0)*(1.0-ratio_v0)+(data2*(1.0-ratio_u0)+data3*ratio_u0)*ratio_ v0)*(1.0-ratio_I)+((data4*(1.0-ratio_u1)+data5*ratio_u1)*(1.0-ratio_v1)+(data6*(1.0-ratio_u1)+data7 *ratio_u1)*ratio_v1)*ratio_I,as shown in Fig. 9; when mode is 3D, eight data are read from data buffer0 and data buffer1 in sequence at the same time, namely data 0, data 1, data 2, data 3, data 4, data 5, data 6, data 7, data 8, data 9, data 10, data 11, data 12, data 13, data 14 and data 15. The intermediate result of filtering is first obtained from the first eight data and the first eight data are data0, data1, data2, data3, data8, data9, data10, data11: ((data0*(1.0-ratio_u0)+data2*ratio_u0)*(1.0-ratio_v0)+((data1*(1.0-ratio_u0)+data3*ratio_u0)*ratio_ v0,((data8*(1.0-ratio_u1)+data9*ratio_u1)*(1.0-ratio_v1)+((data10*(1.0-ratio_u1)+data11*ratio_u1)* ratio_v1, and the intermediate result of filtering is then obtained through the last eight data and the last eight data are data4, data5, data6, data7, data12, data13, data14, data15: ((data4*(1.0-ratio_u0)+data5*ratio_u0)*(1.0-ratio_v0)+((data6*(1.0-ratio_u0)+data7*ratio_u0)*ratio_ v0,((data12*(1.0-ratio_u1)+data13*ratio_u1)*(1.0-ratio_v1)+((data14*(1.0-ratio_u1)+data15*ratio_u 1)*ratio_v1; The final filtering result is: ((((data0*(1.0-ratio_u0)+data2*ratio_u0)*(1.0-ratio_v0)+((data1*(1.0-ratio_u0)+data3*ratio_u0)*rati o_v0)*(1.0-ratio_w0)+(((data4*(1.0-ratio_u0)+data5*ratio_u0)*(1.0-ratio_v0)+((data6*(1.0-ratio_u0) +data7*ratio_u0)*ratio_v0)*ratio_w0)*(1.0-ratio_I)+((((data8*(1.0-ratio_u1)+data9*ratio_u1)*(1.0-rati o_v1)+((data10*(1.0-ratio_u1)+data11*ratio_u1)*ratio_v1)*(1.0-ratio_w1)+(((data12*(1.0-ratio_u1)+ data13*ratio_u1)*(1.0-ratio-v1)+((data14*(1.0-ratio_u1)+data15*ratio_u1)*ratio-v1)*ratio-w1)*ratio _I,as shown in Fig. 10, when anisotropic is enabled,data in data buffer0 and data buffer1 are subjected to anisotropic calculation to obtain the intermediate result of filtering of data 0 and data a1, and the final filtering result is data0*(1.0-ratio_I)+data1*ratio_I; when only level0 is valid and filter_type is near or near_mipmap_near, whether mode is 1D, 2D or 3D, data0 and data 1 are read from data buffer0 and data buffer1 at the same time, and the data 0 and data 1 are directly output without filtering after being converted; if the filtering mode is BAF, when mode is 1D, firstly, one data is sequentially read from data buffer0 and data buffer1 at the same time, respectively data0 and data1, and the final filtering result is data0*(1.0-ratio_u0)+data2*ratio_u0; when mode is 2D, data0, data1, data2 and data3 are sequentially read from data buffer0 and data buffer1 at the same time, and the intermediate result of filtering is data0*(1.0-ratio_u0)+data2 * ratio_u0 through the first two data and the first two data are data0 and data2, as shown in Fig. 5; an intermediate result of filtering is obtained through the last two data and the last two data are data1 and data3: data1*(1.0-ratio_u0)+data3*ratio_u0, and finally the filtering final result is obtained: (data0*(1.0-ratio_u0)+data2*ratio_u0)*(1.0-ratio_I)+(data1*(1.0-ratio_u0)+data3*ratio_u0)*ratio_I, as shown in Fig. 6; when the mode is 3D, four data, namely data0, data1, data2, data3, data4, data5, data6, data7, are sequentially read from data buffer0 and data buffer1 at the same time. The intermediate result of filtering is first obtained from the first four data: data0, data1, data4, data5: (data0*(1.0-ratio_u0)+data1*ratio_u0)*(1.0-ratio_v0)+(data4*(1.0-ratio_u0)+data5*ratio_u0)*ratio_v 0, and then the intermediate result of filtering is obtained from the last four data: data2, data3, data6, data7:(data2*(1.0-ratio_u0)+data3*ratio_u0)*(1.0-ratio_v0)+(data6*(1.0-ratio_u0)+data7*ratio_u0)*r atio_v0; and the final filtering result is((data0*(1.0-ratio_u0)+data1*ratio_u0)*(1.0-ratio_v0)+(data4*(1.0-ratio_u0)+data5*ratio_u0)*ratio _v0)*(1.0-ratio_w0)+((data2*(1.0-ratio_u0)+data3*ratio_u0)*(1.0-ratio_v0)+(data6*(1.0-ratio_u0)+d ata7*ratio_u0)*ratio_v0)*ratio_w0, as shown in Fig. 7. After the filtering operation is performed, the output results of filter are texel_r, texel_g, texel_b and texel_a according to different inte_format formats, if format is color, when only r in inte_format has a value, texel_r is the filtering result, texel_g and texel_b are both 0, and texel_a is 1; if format is depth and stencil, then the result is assigned to the texel_r and texel_g, and texel_b and texel_a are 0. The pixel unit U2 is configured to take border_color data as the input data for the pixel stage when border_color is enabled, and when swizzle operation is not enabled, pixel_r, pixel_g, pixel_b and pixel_a are equal to border_color_r, border_color_g, border_color_b, and border_color_a in border_color, if swizzle operation is enabled, the respective channel data are converted in the swizzle mode, and finally four paths of color components pixel_r,pixel_g,pixel_b,pixel_a are output in parallel.

While the present disclosure has been described hereinabove with reference to embodiments, various modifications may be made thereto and equivalents may substitute components thereof without departing from the scope of the present disclosure. In particular, as long as there is no structural conflict, the various features of the disclosed embodiments of the present disclosure may be combined with each other in any manner, and the case where these combinations are not exhaustively described in this specification is merely for the sake of omitting space and saving resources.\ Therefore, the present disclosure is not limited to the particular embodiments disclosed herein, but includes all claims falling within the scope of the claims.

## Claims

1. A texture mapping hardware accelerator based on a double Buffer architecture, comprising:
an Image U0 unit, configured to store basic information of image, store mode, width, height, depth, border, inte_format, format, type and base of the corresponding image by taking target and different map layers as addresses when mipmap texture is enabled, store mode, width, height, depth, border, inte_format, format, type and base values of the corresponding layer by taking target and different layers as addresses when layers are enabled, and subdivide one address of a mipmap layer into six sub-addresses representing different face information of 0, 1, 2, 3, 4 and 5 when cubemap is enabled; when the layers are enabled without map layer information, the mode, width, height, depth, border, inte_format, format and type of different layers are the same and the base is different; when layers are enabled and map layers are enabled, mode, width, height, depth, border, inte_format, format and type are the same and base is different; register configuration in 1D, 2D, 3D, rectangle, cubemap, 1D_ARRAY, 2D_ARRAY, cubemap_array, 2D_multisample, 2D_multisample, and 2D_multisample_array modes are supported;
an LOD U1 unit, configured to complete level value calculations under different filtering modes and obtain an address for accessing an image unit in combination with an address for accessing target; before level value calculation, first, the basic information of image needs to be obtained as a reference for the subsequent level calculation by taking target and base_level value as level0 for reading the image unit, then the calculation of the level value takes into account two situations: when lod is enabled, if image is in layer mode, at the moment, width and height information of different layers are equal, regardless of the filtering mode being mag_filter or min_filter, a level value closest to the base_level direction is taken as level0 for reading offset of the information of image, while the filter_type size matches the requested filtering size; when lod is enabled, if image is mipmap mode, at the moment, width, height and depth of different layers are not equal, consider mag_filter to take a value closest to base_level for reading offset of the information of image in near mode and linear mode, consider near, linear, near_mipmap_near, and linear_mipmap_near to take a value least close to base_level value for reading offset of image in min_filter mode, while filter-type matches the requested filtering mode, consider min_filter to take two adjacent layers for reading offset of information of image in near_mipmap_linear, and linear_mipmap_linear mode, ratio_I is the fractional part of the lod value minus the level value, at the moment, the integer part of lod is level0, level0 plus 1 is level1, if the lod value is min_Iod, then level0 is the same as level1, so fiter_types are filtering of near_mipmap_near and linear_mipmap_near, respectively; similarly, when a partial derivative is enabled as lod, according to primitive types primitive, dux, duy, dvx, dvy, dwx, dwy, delt_x, delt_y passed from raster, two conditions including polygon/point and line are available, lod of polygon/point and line is obtained through calculating respectively, if image is in layer mode, at the moment, width and height information of different layers are equal, no matter the filtering mode is mag_filter or min_filter, one level value closest to the base_level direction is taken as level0 for reading offset of information of image, and the filter_type size matches the requested filtering size; if image is in mipmap mode, at the moment, width, height and depth of different layers are not equal, consider mag_filter to take the value closest to base_level for reading the offset of information of image in near mode and linear mode, consider near, linear, near_mipmap_near, linear_mipmap_near to take the value least close to base_level for reading offset of image in min_filter mode, while filter-type matches the requested filtering mode, consider min_filter to take two adjacent layers for reading offset of information of image in near_mipmap_linear, linear_mipmap_linear modes, ratio_I is the fractional part of the lod value minus the level value, the integer part of lod is level0, level0 plus 1 is level1, if the lod value is min_Iod, then level0 is the same as level1, so fiter_type is filtering of near_mipmap_near and linear_mipmap_near, respectively; and if level0 and level1 are enabled, the trilinear filtering mode is realized, the following trilinear filtering modes are available: trilinear isotropic (near_mipmap_linear, line_mipmap_linear), trilinear anisotropic; if only level0 is valid, only the following filtering modes are available: point isotropic (near, near_mipmap_near), bilinear isotropic (linear, linear_mipmap_near), bilinear anisotropic.
a CoordinateU2 unit, configured to complete coordinate conversion and address conversion of s, t, r and q in fetch mode and sampler mode; when cubemap_array is enabled, the Q coordinate at the moment is not 0 and represents the layer line number, s, t and r represent the sizes in the x, y and z directions respectively, and s and t coordinates in the plane coordinates are obtained through the mapping relation; when the rectangle mode is enabled, the s and t coordinates at the moment do not need to be subjected to unnormalization processing; if the coordinates s, t and r exceed respective expression ranges, the coordinates are constrained by adopting different wrap modes; when level0 and level1 are enabled, the respective width, height and depth values of level0 and level1 are obtained from the image unit, the respective width, height and depth values are multiplied with s, t and r to obtain the unnormalized texture coordinates u0, v0, w0 and u1, v1, w1, and when only level0 is valid, the width, height and depth values of level0 are obtained from the image unit, the respective width, height and depth values are multiplied with s, t and r to obtain the unnormalized texture coordinates u0, v0, w0; at the moment, ratio_u0, ratio_v0, ratio_w0 are fractional parts of u0, v0, w0, respectively, ratio_ul, ratio_vI, ratio_wI are fractional parts of ul, vI, wI, respectively, inte_u0, inte_v0, inte_w0 are integer parts of u0, v0, w0, respectively, inte_ul, inte_vl, inte_wI are integer parts of ul, vI, wI, respectively; when a wrap operation is performed, if the borde value in the image content has a value, and the address has overflow at the moment, disable requests a texel at the moment, and the border_color value is enabled as input to the final pixel stage;
a Coordinate controller U3 unit, configured to when level0 and level1 are enabled, filter_type is point mode, and mode is 1D, data written into coordinate bufferu0 is inte_u0, and data written into coordinate bufferul is inte_ul; when mode is 2D, data written into coordinate bufferu0 is inte_u0, and data written into coordinate bufferv0 is inte_v0; data written into coordinate bufferul is inte_ul, and the integer part written into coordinate buffervl is inte_vl; when mode is 3D, data written into coordinate bufferu0 is inte_u0, data written into coordinate bufferv0 is inte_v0, data written into coordinate bufferw0 is inte_w0, data written into coordinate bufferul is inte_ul, data written into coordinate buffervl is inte_vl, and data written into coordinate wI is inte_wl; when filter_type is linear mode and mode is 1D, data written into coordinate bufferul is inte_ul, and data written into coordinate bufferul is inte_u1+1; data written into coordinate bufferu0 is inte_u0, and data written into coordinate bufferu0 is inte_u0+1; when mode is 2D, data written to coordinate bufferu0 and coordinate bufferv0 are (inte_u0, inte_v0), (inte_u0+1, inte_v0), (inte_u0, inte_v0+1), and (inte_u0+1, inte_v0+1) in sequence; data written into coordinate bufferul, coordinate buffervl are (inte_ul, inte_vl), (inte_ul+1, inte_vl), (inte_ul, inte_vl+1), and (inte_ul+1, inte_vl+1) in sequence; when mode is 3D, data written into coordinate bufferu0, coordinate bufferv0, and coordinate bufferw0 are (inte_u0,inte_v0,inte_w0),(inte_u0+1,inte_v0,inte_w0),(inte_u0,inte_v0+1,inte_w0),(inte_u0+1, inte_v0+1,inte_w0),(inte_u0,inte_v0,inte_w0+1),(inte_u0+1,inte_v0,inte_w0+1),(inte_u0,inte_v 0+1,inte_w0+1),(inte_u0+1,inte_v0+1,inte_w0+1)in order; data written into coordinate bufferul, coordinate buffervl, coordinate bufferwl are (inte_u1,inte_v1,inte_w1),(inte_u1+1,inte_v1,inte_w1),(inte_u1,inte_v1+1,inte_w1),(inte_u1+1, inte_v1+1,inte_w1),(inte_u1,inte_v1,inte_w1+1),(inte_u1+1,inte_v1,inte_w1+1),(inte_u1,inte_v 1+1,inte_w1+1),(inte_u1+1,inte_v1+1,inte_w1+1)in order; when level0 is enabled, filter_type is point mode, and mode is 1D, and data written into coordinate bufferu0 is inte_u0; when mode is 2D, data written into coordinate bufferu0 is inte_u0, and data written into the coordinate bufferv0 is inte_v0; when mode is 3D, data written into coordinate bufferu0 is inte_u0, data written into coordinate bufferv0 is inte_v0, and data written into coordinate bufferw0 is inte_w0;
when filter_type is linear mode and mode is 1D, data written into coordinate bufferu0 is inte_u0, and data written into coordinate bufferu0 is inte_u0+1; when mode is 2D, data written into coordinate bufferu0 and coordinate bufferv0 are (inte_u0, inte_v0), (inte_u0+1, inte_v0), (inte_u0, inte_v0+1), and (inte_u0+1, inte_v0+1) in sequence; when mode is 3D, data written into coordinate bufferu0, coordinate bufferv0, and coordinate bufferw0 are (inte_u0,inte_v0,inte_w0),(inte_u0+1,inte_v0,inte_w0),(inte_u0,inte_v0+1,inte_w0),(inte_u0+1, inte_v0+1,inte_w0),(inte_u0,inte_v0,inte_w0+1),(inte_u0+1,inte_v0,inte_w0+1),(inte_u0,inte_v 0+1,inte_w0+1),(inte_u0+1,inte_v0+1,inte_w0+1)in sequence; and
an address controller U4 unit, configured to firstly complete calculation from texture coordinates to texture offset addresses; when level0 is valid, mode is 1D, a offset when address calculation has no overflow is size*u0; mode is 2D, and the offset when address calculation has no overflow is size*(width0*u0+v0); mode is 3D, the offset when address calculation has no overflow is size*(width0*u0+v0)+w0*width0*height0; an address for final access to texel cache is base0+offset; the number of addresses under different inte_format conditions are obtained according to an alignment mode of the end of the offset and a 4-byte, and end data are stored in offset0 buffer; due to fact that level1 is invalid, when texel cache is requested, according to a double-buffer operation mode, the odd number of addresses request an address of the texel cache to access cache0, and the even number of addresses request an address of texel cache to access the cache1, and parallel access of the addresses is achieved; when level0 and level1 are both effective, mode is 1D, the offset when address calculation has no overflow is size*u0,size*u1; mode is 2D, and the offset when address calculation has no overflow is size*(width0*u0+v0),size*(width1*u1+v1); mode is 3D, the offset when address computation has no overflow is size*(width0*u0+v0)+w0*width0*height0,size*(width1*u1+v1)+w1*width1*height1; the address for final access to texel cache is base0+level0 offset and base1+level1 offset; and at the moment, cache0 and cachel are requested in parallel.

2. The texture mapping hardware accelerator based on the double Buffer according to claim 1, wherein the LOD U1 unit comprises two directly connected caches, and indexes of cache lines where different texels are located and store and replace operations of the cache lines are completed; when level0 and level1 are valid at the same time, read operation requests for cache0 and cache1 are completed in parallel, and when only level0 is valid, odd cache line is stored in cache0, and even cache line is stored in cache1.

3. The texture mapping hardware accelerator based on the double Buffer according to claim 1, wherein the CoordinateU2 comprises:
a data controllerUO unit, configured to complete a splicing task of data from a cache line in combination with off0 and off1 according to different inte_formats when level0 and level1 are valid at the same time to obtain texture data corresponding to the texture address, write the respective data into data buffer0 and data buffer1 at the same time, and store the data of the respective level at the data buffer0 and the data buffer1 respectively; when only level0 is valid, in the same way, data of respective cache lines are read out from cache0 and cache1 respectively, odd data and even data are obtained according to different inte_format and off0, the odd data and the even data are written into data buffer0 and data buffer1 in a double mode, and at the moment, texel data of the same level are stored in data buffer0 and data buffer1;
a filterU1 unit, configured to firstly complete interception operation, intercept r, g, b and a values with different bit widths for different inte_formats, and then respectively perform filtering calculation in an independent mode, and the interception method of the bit widths is executed according to different inte_formats; when both level0 and level1 are effective, filter_type is filtering of NAF (non-anisotropic) (near_mipmap_linear isotropic, linear mipmap_linear isotropic), BAF (bilinear-anisotropic) (invalid), and TAF (trilinear-anisotropic), and filtering_type is filtering of NAF (non-anisotropic) (near, near mipmap_near, linear mipmap_near), BAF (bilinear anisotropic), and TAF (trilinear-anisotropic) (invalid) when level0 is valid and level1 is invalid; when level0 and level1 are valid at the same time and filter_type is TAF (near_mipmap_linear), whether mode is 1D, 2D and 3D, data0 and data1 are read from data buffer0 and data buffer1 at the same time, and the filtering result is data0*(1.0-ratio_I)+data1*ratio_I; if the filtering mode is TAF (line_mipmap_linear) and mode is 1D, first two data are read from data buffer0 and data buffer1 at the same time, respectively, data0, datal and data2, data3, the intermediate result of filtering is data0*(1.0-ratio_u0)+data2*ratio_u0, data1*(1.0-ratio_u1)+data3*ratio_u1, and a final filtering result is (data0*(1.0-ratio_u0)+(data2*ratio_u0)*(1.0-ratio_l)+(data1*1.0-ratio_u1)+(data3*ratio_u1)*rati o_I; mode is 2D, data0, data1, data2, data3, and data4, data5, data6, data7 are sequentially read from data buffer0 and data buffer1 at the same time, and then an intermediate result of filtering is obtained through the first four data and the first four data are data0, data2, data4 and data6: data0*(1.0-ratio_u0)+data2*ratio_u0, data4*(1.0-ratio_u1)+data6*ratio_u1; the intermediate result of filtering is then obtained through the last four data: datal, data3, data5, data7: data1*(1.0-ratio_u0)+data3*ratio_u0, data5*(1.0-ratio_ul)+data7*ratio_ul, and finally the final results of level0 and levell are obtained: (data0*(1.0-ratio_u0)+data1*ratio_u0)*(1.0-ratio v_0)+(data2* (1.0-ratio_u0)+data3*ratio_ u0*ratio_v0, (data4* (1,0-ratio_ul)+data5*ratio_ul)*(1,0-ratio)+(data6*(1,0-ratio_u1)+data7*ratio_u1)*ratio_v1, and the final filtering result is ((data0* (1.0-ratio_u0)+data1*ratio_u0)*(1.0-ratio_v0)+(data2* (1.0-ratio_u0)+data3*ratio_u0)*ratio_v0)*(1.0-ratio_I)+((data4*(1.0-ratio_ul)+data5*ratio_ul)* (1.0-ratio_vl)+(data6*(1.0-ratio_ul)+data7*ratio_ul)* ratio_vl)*ratio I; mode is 3D, eight data are read from data buffer0 and data buffer1 in sequence at the same time, respectively, data 0, data 1, data 2, data 3, data 4, data 5, data 6, data 7, data 8, data 9, data 10, data 11, data 12, data 13, data 14 and data 15; an intermediate result of filtering is first obtained from the first eight data and the first eight data are data0, data1, data2, data3, data8, data9, data10, data11:((data0*(1.0-ratio_u0)+data2*ratio_u0)*(1.0-ratio_v0)+((data1*(1.0-ratio_u0)+data3*rati o_u0)*ratio_v0,((data8*(1.0-ratio_u1)+data9*ratio_u1)*(1.0-ratio_v1)+((data10*(1.0-ratio_u1)+ data11*ratio_u1)*ratio_v1, the intermediate result of filtering is then obtained through the last eight data and the last eight data are data4, data5, data6, data7, data12, data13, data14, data15:
((data4*(1.0-ratio_u0)+data5*ratio_u0)*(1.0-ratio_v0)+((data6*(1.0-ratio_u0)+data7*ratio_u0)*r atio_v0 ((data12*(1.0-ratio_u1)+data13*ratio_u1)*(1.0-ratio_v1)+((data14*(1.0-ratio_u1)+data15*ratio_ u1)*ratio_v1; a final filtering result is ((((data0*(1.0-ratio_u0)+data2*ratio_u0)*(1.0-ratio_v0)+((data1*(1.0-ratio_u0)+data3*ratio_u0) *ratio_v0)*(1.0-ratio_w0)+(((data4*(1.0-ratio_u0)+data5*ratio_u0)*(1.0-ratio_v0)+((data6*(1.0-r atio-u0)+data7*ratio_u0)*ratio_v0)*ratio_w0)*(1.0-ratio_I)+((((data8*(1.0-rati_u1)+data9*ratio _u1)*(1.0-ratio_v1)+((data10*(1.0-ratio_u1)+data11*ratio_u1)*ratio_v1)*(1.0-ratio_w1)+(((data1 2*(1.0-ratio_u1)+data13*ratio_u1)*(1.0-ratio_v1)+((data14*(1.0-ratio_u1)+data15*ratio_u1)*rati o_v1)*ratio_w1)*ratio_I, and when anisotropic is enabled, data in data buffer0 and data buffer1 are respectively subjected to anisotropic calculation to obtain the intermediate results of filtering of data0 and data1, and a final filtering result is data0*(1.0-ratio_I)+data1*ratio_I; when only level0 is valid and filter_type is near or near mipmap near, whether mode is 1D, 2D or 3D, data data0 and data1 are read from data buffer0 and data buffer1 at the same time, and the data0 and data1 are directly output without filtering after being converted; if the filtering mode is BAF, when mode is 1D, firstly, one data is sequentially read from data buffer0 and data buffer1 at the same time, respectively data0 and data1, and a final filtering result is data0*(1.0-ratio_u0)+data2*ratio_u0; when mode is 2D, data0, data1, data2 and data3 are sequentially read from data buffer0 and data buffer1 at the same time, and the intermediate result of filtering is data0*(1.0-ratio_u0)+data2*ratio_u0 through the first two data and the first two data are data0 and data2; then the intermediate result of filtering is obtained through the last two data and the last two data are data1 and data3: data1*(1.0-ratio_u0)+data3*ratio_u0, and finally a final filtering result is (data0*(1.0-ratio_u0)+data2 *ratio_u0)*(1.0-ratio_I)+(data1*(1.0-ratio_u0)+data3*ratio_u0)*ratio_I; when the mode is 3D, data0, data1, data2, data3, data4, data5, data6, data7 are sequentially read from data buffer0 and data buffer1 at the same time; the intermediate result of filtering is first obtained through the first four data and the first four data are data0,data1,data4,data5 as (data0*(1.0-ratio_u0)+data1*ratio_u0)*(1.0-ratio_v0)+(data4*(1.0-ratio_u0)+data5*ratio_u0)*rat io_v0, then the intermediate result of filtering is obtained through the last four data include data2, data3, data6, data7:
(data2*(1.0-ratio_u0)+data3*ratio_u0)*(1.0-ratio_v0)+(data6*(1.0-ratio_u0)+data7*ratio_u0)*rat io_v0; finally a final filtering result is obtained: ((data0*(1.0-ratio_u0)+data1*ratio_u0)*(1.0-ratio_v0)+(data4*(1.0-ratio_u0)+data5*ratio_u0)*ra tio_v0)*(1,0-ratio_w0)+((data2*(1,0-ratio_u0)+data3*ratio_u0)*(1,0-ratio_v0)+(data6*(1.0-ratio_ u0)+data7*ratio_u0)*ratio_v0)*ratio_w0; after the filtering operation is performed, the output results of filter are texel_r, texel_g, texel_b and texel_a according to different inte_format formats, if format is color, when only r in inte_format has a value, texel_r is a filtering result, texel_g and texel_b are both 0, and texel_a is 1; if format is depth, stencil, then the result is assigned to texel_r and texel_g, and texel_b and texel_a are 0; and
a pixel unit U2, configured to take the border_color data as the input data for the pixel stag when border_color is enabled, and when the swizzle operation is not enabled, pixel r, pixel g, pixel b, pixel a are equal to border_color_r, border_color_g, border_color_b, border_color_a in border_color, if swizzle operation is enabled, the respective channel data are converted in the swizzle mode, and finally, 4 paths of color components pixel_r, pixel_g, pixel_b, pixel_a are output in parallel.

4. The texture mapping hardware accelerator based on the double Buffer according to claim 3, wherein FP32, FP16, FP11, FP10, INT32 data types in Color, depth, stencil, depth_stencil modes are supported.

5. The texture mapping hardware accelerator based on the double Buffer according to claim 3, wherein conversion of different reshaping, floating point type types under RGB/BGR format and different reshaping, floating point type types under RGBA/BGRA format is also supported.

6. The texture mapping hardware accelerator based on the double Buffer according to claim 3, wherein comparison to depth texture of depth, stencil, and depth_stencil and stencil index computation are also supported.
